# DEMANDE DE BREVET EUROPEEN

(11) **EP 2 107 516 A1**
(43) Date de publication de la demande: **07.10.2009**
(21) Numéro de dépôt: 09156172.0
(22) Date de dépôt: 25.03.2009
(51) Int. Cl.: G06Q 10/00

(54) **Procédé et système de constitution d'un réseau social basé sur les habitudes de communication de ses membres**

(30) Priorité: 03.04.2008 FR 0852195
(71) Demandeur: Alcatel Lucent, 75008 Paris (FR)
(72) Inventeur: Vitale, Antonio, 78141, VELIZY (FR); Skraba, Ryan, 91620, NOZAY (FR)
(74) Mandataire: Hedarchet, Stéphane

(57) **Abrégé**

Un système (S) est dédié à la constitution d'un réseau social de membres (M1-M5) définissant des noeuds de réseau et disposant d'au moins un équipement de communication (T1-T5) propres à établir des communications d'au moins un type via au moins un réseau de communication. Ce système (S) comprend i) des moyens de contrôle (MC) chargés, chaque fois qu'un membre (M1) a participé à une communication, de récupérer des données représentatives de cette communication afin de les enregistrer dans des premiers moyens de stockage (MS1) en fonction d'un identifiant du membre (M1), et ii) des moyens de traitement (MT) chargés de traiter certaines au moins des données enregistrées afin de mettre à jour et/ou de créer des attributs qualifiant les membres, puis de mettre à jour et/ou de créer des liens entre membres en fonction des attributs qui les qualifient, afin de constituer un réseau social représentatif des habitudes de communication des membres.

## Description

L'invention concerne les réseaux dits sociaux (ou « social networks »), et plus précisément la constitution et la mise à jour de tels réseaux sociaux.

On entend ici par « réseau social » une structure sociale constituée de noeuds qui représentent généralement des membres (individus (personnes physiques) ou organisations ou sociétés (personnes morales)) et qui sont liés entre eux par au moins un type spécifique de relation, comme par exemple des intérêts communs, des valeurs communes, des idées communes, des échanges (financiers, commerciaux, politiques, et analogues), des amis communs, des parentés, des aversions communes, des relations d'affaire ou de travail communes, des liens Internet, des problèmes médicaux, ou des déplacements suivant des trajets communs. Chaque noeud d'un réseau social est donc associé à au moins un attribut qui qualifie le membre qu'il représente, et les noeuds de réseau sont liés entre eux par des liens inter-membres fonction des attributs de ces derniers. On notera que les liens peuvent avoir également leurs propres attributs. Un réseau social est donc, notamment, une source d'informations pour des personnes physiques ou morales qui partagent des intérêts communs et/ou des activités communes ou qui sont intéressés par l'exploration des intérêts et/ou des activités et/ou des liens d'autres personnes physiques ou morales.

Comme le sait l'homme de l'art, il existe plusieurs types différents de réseau social.

Un premier type concerne les réseaux sociaux basés sur l'Internet (ou « web »). C'est notamment le cas des réseaux sociaux appelés Facebook, MySpace et Linkedln. Ils fournissent à leurs membres une multitude de moyens leur permettant d'interagir entre eux, et notamment la messagerie en temps réel textuelle ou audio (« chat » ou IM (pour « Instant Messaging »)), la messagerie électronique (ou courriel ou encore « e-mail »), la vidéo, le partage de fichiers, les forums (ou groupes) de discussion, ou la mise à disposition d'informations en ligne (ou « blogs »).

Les réseaux sociaux de ce premier type présentent au moins quatre inconvénients :
- ils ne permettent que la constitution de communautés de membres qui partagent un intérêt commun spécifique ou un groupe restreint d'intérêts communs,
- le comportement effectif des membres en matière de communication n'est pas considéré comme un critère générique de relation entre noeuds,
- leur constitution se fait manuellement, contact après contact, par les usagers finaux,
- l'utilisation d'un navigateur Internet (ou « web browser ») est recommandée ou obligatoire lorsque l'on veut accéder à des services Internet.

Un deuxième type concerne les réseaux sociaux basés sur les équipements de communication. Ces derniers sont des téléphones mobiles qui sont équipés de manière à permettre à leurs utilisateurs de constituer des listes d'amis ou contacts (ou relations, éventuellement d'affaire ou de travail) ou encore associés en vue de suivre leurs déplacements par localisation (y compris à l'étranger) pour leur proposer des cartes personnalisées matérialisant les localisations respectives des personnes de ces listes et les alerter lorsqu'une personne choisie d'une liste est présente dans une zone choisie. Grâce à de tels téléphones mobiles à application de localisation, les usagers peuvent transmettre des messages communs ou des invitations communes à des groupes de personnes répondant à certains attributs choisis (y compris la localisation).

Les réseaux sociaux de ce deuxième type présentent au moins trois inconvénients :
- ils ne concernent que les téléphones mobiles (ou équipements analogues),
- ni leur constitution ni leur mise à jour n'est automatique,
- le comportement effectif des membres en matière de communication n'est pas considéré comme un critère générique de relation entre noeuds.

Un troisième type concerne les réseaux sociaux basés sur les canaux de type IRC (« Internet Relay Chat »). C'est notamment le cas de ce que l'on appelle en anglais un « Social Network Bot », comme par exemple PieSpy qui contrôle un ensemble de canaux IRC. Il est rappelé qu'un « bot » est un programme Internet qui fait des tâches automatiques. PieSpy utilise un simple jeu d'heuristiques afin d'inférer des relations entre des paires d'usagers qui permettent de construire un modèle mathématique de réseau social pour chaque canal IRC. Ce type de réseau social peut être conçu et utilisé pour créer des animations de réseaux sociaux en évolution.

L'inconvénient principal des réseaux sociaux de ce troisième type réside dans le fait qu'ils ne prennent en considération que les canaux IRC.

Un quatrième type concerne les réseaux sociaux et services de micro mise à disposition d'informations (ou « micro-blogging ») libres, tels que Twitter. Ce dernier permet aux usagers de transmettre des mises à jour textuelles (d'un maximum de 140 caractères) via des SMS, des messages instantanés (IM), des courriers électroniques, un site Internet dédié ou une application dédiée. Les mises à jour effectuées par un usager s'affichent sur la page du profil d'usager et sont immédiatement transmises à d'autres usagers qui ont accepté de les recevoir et qui ont été éventuellement filtrés (par exemple du fait qu'ils appartiennent à une liste d'amis).

Les réseaux sociaux de ce quatrième type présentent au moins deux inconvénients :
- ils offrent un service qui se résume à l'information d'amis à propos d'activités personnelles en cours,
- ils ne permettent des interactions entre terminaux de communication fixes et terminaux de communication mobiles que par le biais de messages courts de type « push SMS ».

Aucune solution connue n'apportant une entière satisfaction, l'invention a donc pour but d'améliorer la situation, et notamment de proposer la constitution d'un réseau social en fonction des habitudes de communication de ses membres plutôt qu'en fonction de leurs seuls intérêts.

Elle propose à cet effet un procédé dédié à la constitution d'un réseau social de membres définissant des noeuds de réseau et disposant d'au moins un équipement de communication capable d'établir des communications d'au moins un type via au moins un réseau de communication.

Ce procédé se caractérise par le fait qu'il consiste, chaque fois qu'un membre a participé à une communication, à récupérer des données représentatives de cette communication afin de les enregistrer en fonction d'un identifiant du membre, puis à traiter certaines au moins des données enregistrées afin de mettre à jour et/ou créer des attributs qualifiant les membres, puis à mettre à jour et/ou créer des liens entre membres en fonction des attributs qui les qualifient, afin de constituer un réseau social représentatif des habitudes de communication des membres.

Le procédé selon l'invention peut comporter d'autres caractéristiques qui peuvent être prises séparément ou en combinaison, et notamment :
- les données représentatives d'une communication établie (ou d'une tentative de communication), dites données de communication, peuvent être choisies parmi (au moins) un identifiant de membre appelant, un identifiant de membre appelé, le type de la communication établie, la date de la communication, l'horaire du début de la communication, l'horaire de la fin de la communication, et la durée de la communication ;
- on peut traiter de façon statistique certaines au moins des données de communication enregistrées (pour chaque couple de noeuds dans le réseau social) afin d'obtenir et/ou de mettre à jour des données statistiques choisies parmi (au moins) la fréquence moyenne des communications auxquelles un membre a participé, la fréquence moyenne des communications initiées par un membre, la fréquence moyenne des communications reçues par un membre, un rapport représentatif du nombre de communications initiées par un membre divisé par le nombre de communications reçues par ce membre, la durée moyenne des communications auxquelles un membre a participé, la répartition des communications auxquelles un membre a participé en fonction de leurs types, et les types des communications auxquelles un membre a participé dans un intervalle de temps choisi ;
- on peut traiter certaines au moins des données de communication enregistrées et/ou certaines au moins des données statistiques obtenues en fonction d'au moins une règle d'inférence choisie de manière à obtenir et/ou mettre à jour des données de raisonnement ;
- les règles d'inférence peuvent être définies par des membres et/ou par un administrateur du réseau de communication ;
- on peut constituer un diagramme représentatif d'au moins un groupe de noeuds de réseau choisis et des liens existant entre ces derniers en fonction d'au moins un critère choisi.

L'invention propose également un système dédié à la constitution d'un réseau social de membres définissant des noeuds de réseau et disposant d'au moins un équipement de communication capable d'établir des communications d'au moins un type via au moins un réseau de communication.

Ce système se caractérise par le fait qu'il comprend :
- des moyens de contrôle chargés, chaque fois qu'un membre a participé à une communication, de récupérer des données qui sont représentatives de cette communication afin de les enregistrer dans des premiers moyens de stockage en fonction d'un identifiant du membre, et
- des moyens de traitement chargés de traiter certaines au moins des données enregistrées de manière à mettre à jour et/ou créer des attributs qualifiant lesdits membres, puis de mettre à jour et/ou créer des liens entre membres en fonction des attributs qui les qualifient, afin de constituer un réseau social représentatif des habitudes de communication des membres.

Le système selon l'invention peut comporter d'autres caractéristiques qui peuvent être prises séparément ou en combinaison, et notamment :
- ses moyens de contrôle peuvent être chargés de récupérer et enregistrer des données représentatives d'une communication (ou d'une tentative de communication), dites données de communication, choisies parmi (au moins) un identifiant de membre appelant, un identifiant de membre appelé, le type de la communication, la date de la communication, l'horaire du début de la communication, l'horaire de la fin de la communication et la durée de la communication ;
- ses moyens de traitement peuvent comprendre un premier moyen de traitement chargé de traiter de façon statistique certaines au moins des données de communication enregistrées (pour chaque couple de noeuds dans le réseau social) afin d'obtenir et/ou de mettre à jour des données statistiques stockées dans des deuxièmes moyens de stockage et choisies parmi (au moins) la fréquence moyenne des communications auxquelles un membre a participé, la fréquence moyenne des communications initiées par un membre, la fréquence moyenne des communications reçues par un membre, un rapport représentatif du nombre de communications initiées par un membre divisé par le nombre de communications reçues par ce membre, la durée moyenne des communications auxquelles un membre a participé, la répartition des communications auxquelles un membre a participé en fonction de leurs types, et les types des communications auxquelles un membre a participé dans un intervalle de temps choisi ;
- ses moyens de traitement peuvent comprendre un deuxième moyen de traitement chargé de traiter certaines au moins des données de communication enregistrées et/ou certaines au moins des données statistiques obtenues, en fonction d'au moins une règle d'inférence choisie, afin d'obtenir et/ou de mettre à jour des données de raisonnement stockées dans des troisièmes moyens de stockage ;
   ➢ les règles d'inférence peuvent être définies par des membres et/ou par un administrateur du réseau de communication ;
- ses moyens de traitement peuvent comprendre un troisième moyen de traitement chargé de traiter certaines au moins des données de communication enregistrées dans les premiers moyens de stockage et/ou certaines au moins des données statistiques enregistrées dans les deuxièmes moyens de stockage et/ou certaines au moins des données de raisonnement enregistrées dans les troisièmes moyens de stockage afin de créer et/ou de mettre à jour des attributs enregistrés dans des quatrièmes moyens de stockage en correspondance des noeuds de réseau, puis de créer et/ou de mettre à jour des liens entre membres enregistrés dans les quatrièmes moyens de stockage en fonction des attributs qui qualifient les membres, afin de constituer un réseau social représentatif des habitudes de communication des membres ;
   ➢ le troisième moyen de traitement peut être chargé de constituer un diagramme représentatif d'au moins un groupe de noeuds de réseau choisis et des liens existant entre ces derniers en fonction d'au moins un critère choisi.

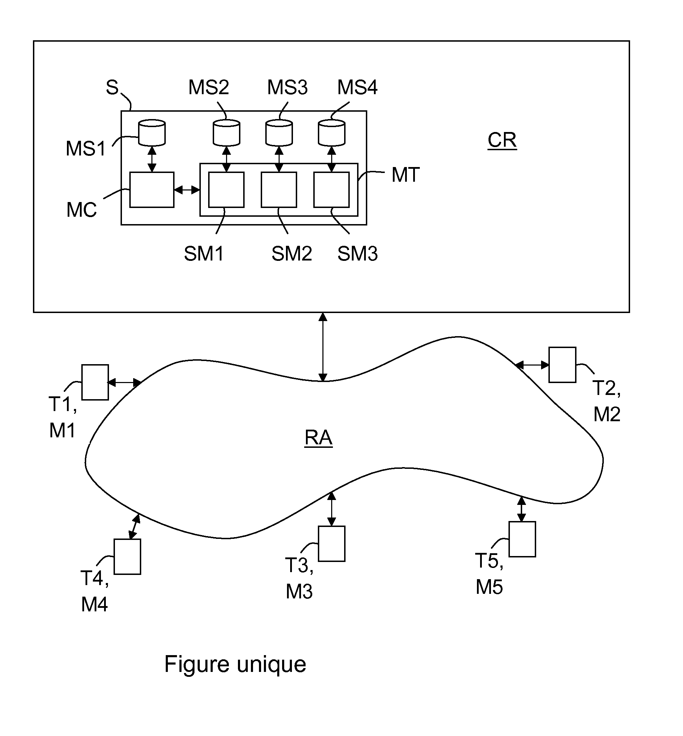

D'autres caractéristiques et avantages de l'invention apparaîtront à l'examen de la description détaillée ci-après, et du dessin annexé, sur lequel l'unique figure illustre de façon très schématique un réseau de communication dont le coeur de réseau est équipé d'un exemple de réalisation d'un système de constitution de réseau social selon l'invention. Le dessin annexé pourra non seulement servir à compléter l'invention, mais aussi contribuer à sa définition, le cas échéant.

L'invention a pour objet de permettre la constitution d'un réseau social en fonction au moins des habitudes de communication de ses membres, lesquels sont équipés d'au moins un équipement de communication capable d'établir des communications d'au moins un type via au moins un réseau de communication.

Dans ce qui suit, on considère à titre d'exemple non limitatif que les membres (Mi) du réseau social à constituer (et à mettre à jour) sont tous clients d'un même réseau de communication (RA, CR). Mais l'invention n'est pas limitée à cette situation. En effet, les membres d'un réseau social peuvent être clients (ou abonnés) de plusieurs (au moins deux) réseaux de communication, éventuellement de types différents, filaires ou non filaires. Dans ce cas, une plateforme dédiée à l'interconnexion (ou convergence) entre réseaux de types différents peut être nécessaire.

Par ailleurs, on considère dans ce qui suit, à titre d'exemple non limitatif, que le réseau (de communication) auquel sont connectés les équipements de communication (Ti) des membres (Mi) est un réseau sans fil par exemple de type réseau mobile (ou cellulaire). Mais, l'invention n'est pas limitée à ce type de réseau de communication. Elle concerne en effet tout type de réseau (ou infrastructure) de communication disposant d'au moins un réseau d'accès, filaire ou non filaire, permettant aux équipements de communication qui sont connectés à lui d'établir des communications d'au moins un type (et de préférence plusieurs). Le réseau d'accès pourra donc être un réseau filaire, tel qu'un réseau xDSL ou à câbles ou à fibres optiques, ou bien un réseau sans fil, tel qu'un réseau mobile (ou cellulaire) ou un réseau local (standards WLAN et WiMAX).

On a schématiquement illustré sur l'unique figure un réseau (de communication) RA et CR comprenant classiquement un coeur de réseau (ou « core network ») CR, éventuellement de type IMS (« IP Multimedia Subsystem »), couplé à un réseau d'accès RA auquel sont connectés (ou peuvent se connecter) des équipements (de communication) Ti d'usagers qui constituent des membres Mi d'un réseau social à constituer ou constitué et à mettre à jour. L'indice i prend ici des valeurs comprises entre 1 et 5, mais il peut prendre n'importe quelle valeur supérieure ou égale à deux.

Chaque membre Mi constitue un noeud Ni de son réseau social.

On considère dans ce qui suit, à titre d'exemple non limitatif, que chaque membre Mi ne dispose que d'un seul équipement (de communication) Ti, comme par exemple un téléphone mobile (ou cellulaire). Mais, l'invention n'est pas limitée à cette situation. Un membre Mi peut en effet être équipé de plusieurs (au moins deux) équipements (de communication) Ti, éventuellement de types différents, comme par exemple un téléphone fixe ou mobile (ou un assistant numérique personnel (ou PDA)) et un ordinateur fixe ou portable.

L'invention propose de mettre en oeuvre un procédé dédié à la constitution (et la mise à jour) d'un réseau social de membres Mi.

Ce procédé est mis en oeuvre au sein du réseau RA et CR chaque fois qu'un membre Mi a participé à une communication. Sa mise en oeuvre peut par exemple se faire au moyen d'un système S du type de celui qui est illustré sur l'unique figure. On notera que dans l'exemple non limitatif illustré le système S selon l'invention est implanté dans le coeur de réseau CR (éventuellement de type IMS). Mais, cela n'est pas obligatoire. En effet, un tel système S peut être également connecté à, ou accessible par, un coeur de réseau CR.

Chaque fois qu'un membre Mi a participé (ou a tenté de participer) à une communication (en tant qu'appelant ou appelé), on commence par récupérer automatiquement des données, dites de communication, qui sont représentatives de cette communication (ou tentative de communication), afin de les enregistrer en fonction d'un identifiant du membre Mi. Les données de communication constituent ce que l'on appelle ci-après un évènement de communication.

On notera que cette récupération et cet enregistrement peuvent se faire au moyen d'un module de contrôle MC du système S. Plus précisément, le module de contrôle MC peut accéder à des moyens de stockage (de son propre réseau et/ou de tout autre réseau) dans le(s)quel(s) sont stockées les données qui représentent une communication impliquant un membre Mi. Le module de contrôle MC peut identifier un membre Mi ayant participé à une communication grâce à un identifiant, comme par exemple son identifiant IMPU ou son identifiant SIP/URI.

On notera que la récupération de données se fait préférentiellement après une procédure de contrôle d'accès, par exemple de type AAA (« Authentication, Authorization and Accounting » - Authentification, Autorisation et Facturation). Par ailleurs, la récupération de données peut se faire au sein d'un réseau visité par un membre Mi ou bien dans le coeur de réseau du réseau de domicile d'un membre Mi.

Ensuite, le module de contrôle MC peut stocker les données de communication qu'il a récupérées dans des premiers moyens de stockage MS1 de son système S.

Ces premiers moyens de stockage MS1 peuvent se présenter sous toute forme connue de l'homme de l'art, et notamment sous la forme d'une mémoire ou d'une base de données.

On notera que le module de contrôle MC peut par exemple se présenter sous la forme d'un serveur d'application (ou « application server »).

Tout type de données de communication peut être récupéré, et notamment (et non limitativement) l'identifiant d'un membre appelant, l'identifiant d'un membre appelé, le type de la communication établie, la date de la communication, l'horaire du début de la communication, l'horaire de la fin de la communication et la durée de la communication.

Une fois que des données de communication relatives à une communication ont été enregistrées (par exemple dans les premiers moyens de stockage MS1), on traite certaines au moins des données qui sont enregistrées afin de mettre à jour et/ou de créer des attributs qui qualifient les membres Mi du réseau social.

Tout type de traitement connu de l'homme de l'art peut être appliqué aux données enregistrées.

Ainsi, on peut par exemple effectuer un traitement de type statistique afin d'obtenir des valeurs de variables statistiques.

On notera que ce(s) traitement(s) statistique(s) peu(ven)t se faire au moyen d'un premier sous-module SM1 faisant partie d'un module de traitement MT du système S. Plus précisément, le premier sous-module SM1 peut accéder aux premiers moyens de stockage MS1 (éventuellement via le module de contrôle MC) afin de collecter des données de communication enregistrées, puis traiter statistiquement ces données collectées afin d'obtenir et/ou de mettre à jour des données statistiques (variables) qui sont stockées dans des deuxièmes moyens de stockage MS2 du système S.

On comprendra que certains traitements statistiques peuvent concerner simultanément des données de communication (récupérées dans les premiers moyens de stockage MS1) et des données statistiques (stockées dans les deuxièmes moyens de stockage MS2).

Ces deuxièmes moyens de stockage MS2 peuvent se présenter sous toute forme connue de l'homme de l'art, et notamment sous la forme d'une mémoire ou d'une base de données.

On notera que certaines données peuvent être des ontologies. Il est rappelé qu'une ontologie est une description formelle (ou un modèle de données) de termes ou concepts qui sont manipulés dans un domaine donné, ainsi que des relations entre ces termes ou concepts.

On notera également que le premier sous-module SM1 peut par exemple se présenter sous la forme d'un serveur d'application.

Tout type de variable ayant un rapport avec un évènement de communication peut être utilisé, et notamment (et non limitativement), la fréquence moyenne des communications auxquelles un membre a participé, la fréquence moyenne des communications qui ont été initiées par un membre, la fréquence moyenne des communications qui ont été reçues par un membre, un rapport qui est représentatif du nombre de communications qui ont été initiées par un membre divisé par le nombre de communications qui ont été reçues par ce même membre, la durée moyenne des communications auxquelles un membre a participé, la répartition des communications auxquelles un membre a participé en fonction de leurs types, et les types des communications auxquelles un membre a participé dans un intervalle de temps choisi (par exemple pendant la semaine ou le mois ou encore le trimestre qui vient de s'écouler).

Grâce au(x) traitement(s) statistique(s), on peut par exemple déterminer si un membre est plus souvent appelé ou appelant, ou bien quels sont les membres qu'un membre donné appelle le plus souvent, ou encore quels sont les membres qui appellent le plus souvent un membre donné.

Il est important de noter que tout type de communication peut être considéré, et notamment les appels téléphoniques mobiles classiques, les appels téléphoniques fixes classiques, les communications en mode voix sur IP (ou VoIP), les communications en mode vidéo, les messages électroniques (courriels (ou e-mails)), les messages courts (SMS ou MMS), les messages instantanés (ou IMs (pour « Instant Messagings »), par exemple les « chats »), les forums (ou groupes) de discussion, le partage de fichiers et les télécopies.

On comprendra que lorsqu'une nouvelle variable statistique est créée, ou lorsqu'une variable statistique est mise à jour, sa valeur est stockée dans les deuxièmes moyens de stockage MS2 par le premier sous-module SM1.

D'une manière générale les traitements statistiques sont destinés à rendre les données de communication aussi exploitables que possible.

On peut également, en variante ou en complément, effectuer au moins un traitement dit « de raisonnement » sur certaines au moins des données de communication enregistrées et/ou certaines au moins des données statistiques obtenues, en fonction d'au moins une règle d'inférence choisie, afin d'obtenir et/ou de mettre à jour des données de raisonnement. L'inférence est une opération mentale qui consiste à tirer une conclusion d'une série de propositions considérées comme vraies. Chaque conclusion est déduite à partir de règles de base. On notera par ailleurs que l'on peut distinguer trois types d'inférence : la déduction, l'induction et l'abduction.

Tout type de règle d'inférence connu de l'homme de l'art peut être utilisé. Ces règles d'inférence peuvent être définies par des membres Mi (par exemple en fonction de leurs besoins personnels) et/ou par l'administrateur du réseau RA et CR.

Quelques exemples de règle d'inférence sont donnés ci-après. Ils reposent sur une ou plusieurs hypothèses comme par exemple le type de relation et/ou la qualité d'une relation et/ou le comportement attendu et/ou souhaité. Les conclusions associées dépendent notamment du dépassement des niveaux subjectifs établis par les usagers (utilisateurs finaux) et/ou l'administrateur du système.

Un premier exemple de règle d'inférence peut être : « si une personne impliquée dans une relation amicale a toujours (ou au moins très souvent) le rôle d'appelant, alors la relation est déséquilibrée et de mauvaise qualité ».

Un deuxième exemple de règle d'inférence peut être : « si une personne impliquée dans une relation professionnelle est trop (ou très) souvent appelée par les mêmes clients et/ou qu'elle n'appelle jamais des clients, alors cette relation est déséquilibrée et de mauvaise qualité ».

Un troisième exemple de règle d'inférence peut être : « si une personne impliquée dans une relation professionnelle ne répond jamais à certains de ses collègues (et/ou qu'elle n'appelle jamais ces derniers), alors la relation est déséquilibrée et de mauvaise qualité ».

Un quatrième exemple de règle d'inférence peut être : « si deux personnes impliquées dans une relation professionnelle et/ou amicale s'appellent réciproquement, fréquemment et avec de multiples types de communication, alors la relation est équilibrée et de bonne qualité ».

Un cinquième exemple de règle d'inférence peut être : « si deux personnes impliquées dans une relation professionnelle et/ou amicale s'appellent occasionnellement ou rarement et/ou qu'elles ne se sont pas appelées depuis (très) longtemps, alors la relation est faible et/ou obsolète ».

On notera que ce(s) traitement(s) de raisonnement peu(ven)t se faire au moyen d'un deuxième sous-module SM2 faisant partie du module de traitement MT du système S. Plus précisément, le deuxième sous-module SM2 peut accéder aux premiers moyens de stockage MS1 (éventuellement via le module de contrôle MC) et/ou aux deuxièmes moyens de stockage MS2 (éventuellement via le premier sous-module de traitement SM1) et/ou à d'autres moyens de stockage de son réseau RA, CR (par exemple MS3 et/ou MS4) ou de tout autre réseau, afin de collecter des données de communication enregistrées et/ou des données statistiques et/ou des données de raisonnement et/ou d'autres types de données, puis traiter ces données collectées afin d'obtenir et/ou de mettre à jour des données de raisonnement qui sont stockées dans des troisièmes moyens de stockage MS3 du système S.

On comprendra que certains traitements de raisonnement peuvent concerner simultanément des données de communication (récupérées dans les premiers moyens de stockage MS1) et des données statistiques (stockées dans les deuxièmes moyens de stockage MS2) et/ou des données de raisonnement (stockées dans les troisièmes moyens de stockage MS3).

Ces troisièmes moyens de stockage MS3 peuvent se présenter sous toute forme connue de l'homme de l'art, et notamment sous la forme d'une mémoire ou d'une base de données. Ils peuvent également stocker les définitions des règles d'inférence (et/ou tout autre règle utilisée pour effectuer un traitement de raisonnement).

On notera que le deuxième sous-module SM2 peut par exemple se présenter sous la forme d'un serveur d'application.

Grâce au(x) traitement(s) de raisonnement, on peut par exemple déterminer si des membres s'apprécient ou se détestent, ou bien si un membre satisfait ou ne satisfait pas ses clients (membres), ou encore si un membre a l'habitude de peu répondre aux appels. D'une manière générale les traitements de raisonnement sont destinés à rendre les données de communication et les données statistiques aussi exploitables que possible.

On peut également, en variante ou en complément, effectuer au moins un traitement de type dit d'extraction sur certaines au moins des données de communication enregistrées et/ou certaines au moins des données statistiques enregistrées et/ou certaines au moins des données de raisonnement enregistrées, afin de mettre à jour et/ou de créer des attributs qui qualifient les membres Mi du réseau social.

Tout type de traitement d'extraction connu de l'homme de l'art peut être utilisé dès lors qu'il permet de déduire des attributs de données de communication et/ou statistiques et/ou de raisonnement.

Quelques exemples d'attributs déductibles sont donnés ci-après.

Un premier exemple peut être le type de relation (amical et/ou professionnel). On comprendra en effet que lorsqu'une personne n'effectue des communications que le soir et en fin de semaine, cela indique une relation extraprofessionnelle. De même, lorsqu'une personne n'effectue des communications que pendant les jours et horaires de travail, cela indique une relation purement professionnelle.

Un deuxième exemple peut être la qualité d'une relation non professionnelle (intime ou très amicale). On comprendra en effet que lorsqu'une personne échange fréquemment et de façon réciproque des SMS (messages courts) avec une autre personne, cela peut indiquer que ces deux personnes ont une relation intime. En revanche, on peut considérer qu'en cas d'échanges fréquents de messages instantanés (IM/Chat) entre deux personnes, cela indique une relation très amicale entre ces deux personnes. Par ailleurs, on peut considérer qu'en cas d'échanges occasionnels de courriels (ou e-mails) entre deux personnes, cela indique une relation non intime entre ces deux personnes.

Un troisième exemple peut être la qualité d'une relation professionnelle. On comprendra en effet que lorsqu'une personne échange souvent des courriels (ou e-mails) avec une seule autre personne (et/ou avec un nombre très limité de personnes), cela indique une relation forte entre ces personnes.

On notera que ce(s) traitement(s) d'extraction peu(ven)t se faire au moyen d'un troisième sous-module SM3 faisant partie du module de traitement MT du système S. Plus précisément, le troisième sous-module SM3 peut accéder aux premiers moyens de stockage MS1 (éventuellement via le module de contrôle MC) et/ou aux deuxièmes moyens de stockage MS2 (éventuellement via le premier sous-module de traitement SM1) et/ou aux troisièmes moyens de stockage MS3 (éventuellement via le deuxième sous-module de traitement SM2) et/ou à des quatrièmes moyens de stockage MS4 du système S, afin de collecter des données de communication enregistrées et/ou des données statistiques et/ou des données de raisonnement et/ou des données d'extraction (attributs et/ou liens inter-noeuds (ou inter-membres)), puis traiter ces données collectées afin d'obtenir et/ou de mettre à jour des données d'extraction (attributs) qui sont stockées dans les quatrièmes moyens de stockage MS4.

On comprendra que certains traitements d'extraction peuvent concerner simultanément des données de communication (récupérées dans les premiers moyens de stockage MS1) et des données statistiques (stockées dans les deuxièmes moyens de stockage MS2) et/ou des données de raisonnement (stockées dans les troisièmes moyens de stockage MS3) et/ou des données d'extraction (stockées dans les quatrièmes moyens de stockage MS4).

Ces quatrièmes moyens de stockage MS4 peuvent se présenter sous toute forme connue de l'homme de l'art, et notamment sous la forme d'une mémoire ou d'une base de données.

On notera que le troisième sous-module SM3 peut par exemple se présenter sous la forme d'un serveur d'application.

Une fois que des attributs ont été créés ou mis à jour, le procédé selon l'invention se poursuit par la mise à jour et/ou la création de liens inter-membres (ou inter-noeuds) en fonction des attributs qui les qualifient (et qui viennent d'être éventuellement créés ou mis à jour). Puis, une fois que l'on dispose d'une mise à jour des attributs des membres Mi du réseau social et d'une mise à jour des liens entre ces membres Mi, on peut constituer ou mettre à jour ledit réseau social. On comprendra que ce dernier est représentatif, grâce à l'invention, au moins des habitudes de communication de ses membres Mi puisque sa constitution est initialement basée sur la collecte de données de communication représentatives des communications impliquant les membres Mi.

On notera que le troisième sous-module SM3 peut par exemple être également chargé de la mise à jour et/ou de la création des liens inter-membres (ou inter-noeuds) en fonction des attributs qui les qualifient.

Lorsqu'un attribut ou un lien est créé, ou lorsqu'un attribut ou un lien est mis à jour, sa définition est stockée dans les quatrièmes moyens de stockage MS4 par le troisième sous-module SM3.

Il est important de noter que lorsque les attributs et liens ont été mis à jour, on peut constituer, à la requête d'un membre Mi ou de toute autre personne habilitée, un diagramme qui représente au moins un groupe de noeuds de réseau Ni choisis (voire même tous les noeuds de réseau Ni) ainsi que des liens qui existent entre ces noeuds de réseau Ni choisis, en fonction d'au moins un critère choisi qui est défini dans la requête.

A titre d'exemple non limitatif, un critère de base peut être la robustesse et la bonne qualité d'une liaison entre noeuds. Dans ce cas, on peut par exemple considérer que pour un seul noeud donné on sélectionne les noeuds avec lesquels il est le plus souvent et/ou le plus récemment et/ou le plus longtemps en communication. On notera que l'on peut alors également prendre en compte un critère portant sur le niveau (et/ou nombre) de cercles de relations (premier, deuxième, troisième, etc, niveaux de noeuds intermédiaires). On notera que l'on peut alors également prendre en compte un critère portant sur le type et/ou la qualité de la relation ((très) intime, amicale, professionnelle, etc).

On peut également (et par exemple) considérer que pour deux noeuds donnés, on sélectionne les noeuds intermédiaires qui participent le plus à les mettre en relation et qui ont donc un rôle stratégique dans les liaisons relationnelles entre ces deux noeuds.

On peut également (et par exemple) considérer que pour deux groupes de noeuds donnés, on sélectionne les noeuds qui participent le plus à les mettre en relation et qui ont donc un rôle stratégique dans les liaisons relationnelles entre ces deux groupes.

Tout type de diagramme connu de l'homme de l'art peut être constitué dès lors qu'il est basé sur une représentation de noeuds de réseau Ni associés à des attributs et de liens inter-noeuds (ou inter-membres).

Par exemple, on peut utiliser des lignes de couleurs et/ou des morphologies différentes pour caractériser des communications de types différents. On peut également utiliser des tons plus ou moins foncés et/ou des morphologies différentes pour signaler qu'un type de communication est plus ou moins utilisé par un membre Mi, ou qu'un membre Mi appelle très souvent ou peu souvent un autre membre Mi'.

On notera que le troisième sous-module SM3 peut par exemple être également chargé de la constitution des diagrammes qui représentent au moins partiellement le réseau social, à partir des critères définis dans les requêtes et des données stockées dans les quatrièmes moyens de stockage MS4.

Les données qui définissent un diagramme constitué sont transmises à un équipement de communication du membre Mi ou de la personne habilitée qui a requis ce diagramme, afin que ce dernier puisse être affiché et/ou que ses données puissent être utilisées par une éventuelle application hébergée par l'équipement ou par une plateforme (ou un serveur) de service dédié(e) au réseau social.

On notera que les données qui définissent certains attributs et certains liens inter-membres (et qui sont stockées dans les quatrièmes moyens de stockage MS4) peuvent être également transmises à un équipement de communication du membre Mi ou de la personne habilitée qui les a requises afin qu'elles puissent être utilisées par une éventuelle application hébergée par l'équipement ou par une plateforme (ou un serveur) de service dédié(e) au réseau social.

Il est important de noter que les données présentées ci-avant sont collectées dans le respect des lois relatives à la confidentialité des données d'usagers. Elles peuvent donc faire éventuellement l'objet de filtrage(s).

De même, les données sont transmises aux membres Mi ou personnes habilitées dans le respect des lois relatives à la confidentialité des données d'usagers. Elles peuvent donc faire éventuellement l'objet de filtrage(s).

Le système S selon l'invention, et notamment son module de contrôle MC et son module de traitement MT, ainsi que ses éventuels moyens de stockage MS1 à MS4, peuvent être réalisés sous la forme de circuits électroniques, de modules logiciels (ou informatiques), ou d'une combinaison de circuits électroniques et de modules logiciels.

L'invention ne se limite pas aux modes de réalisation de système et de procédé de constitution de réseau social décrits ci-avant, seulement à titre d'exemple, mais elle englobe toutes les variantes que pourra envisager l'homme de l'art dans le cadre des revendications ci-après.

## Revendications

1. Procédé de constitution d'un réseau social de membres (Mi) définissant des noeuds de réseau et disposant d'au moins un équipement de communication (Ti) agencé pour établir des communications d'au moins un type via au moins un réseau de communication, **caractérisé en ce qu'**il consiste, chaque fois qu'un membre (Mi) a participé à une communication, à récupérer des données représentatives de cette communication afin de les enregistrer en fonction d'un identifiant dudit membre (Mi), puis à traiter certaines au moins desdites données enregistrées afin de mettre à jour et/ou créer des attributs qualifiant lesdits membres (Mi), puis à mettre à jour et/ou créer des liens entre membres (Mi) en fonction des attributs qui les qualifient, de manière à constituer un réseau social représentatif des habitudes de communication desdits membres (Mi).

2. Procédé selon la revendication 1, **caractérisé en ce que** les données représentatives d'une communication, dites données de communication, sont choisies dans un groupe comprenant au moins un identifiant de membre appelant, un identifiant de membre appelé, le type de la communication établie, la date de la communication, l'horaire du début de la communication, l'horaire de la fin de la communication et la durée de la communication.

3. Procédé selon l'une des revendications 1 et 2, **caractérisé en ce que** l'on traite de façon statistique certaines au moins desdites données de communication enregistrées de manière à obtenir et/ou mettre à jour des données statistiques choisies dans un groupe comprenant au moins la fréquence moyenne des communications auxquelles un membre a participé, la fréquence moyenne des communications initiées par un membre, la fréquence moyenne des communications reçues par un membre, un rapport représentatif du nombre de communications initiées par un membre divisé par le nombre de communications reçues par ledit membre, la durée moyenne des communications auxquelles un membre a participé, la répartition des communications auxquelles un membre a participé en fonction de leurs types, et les types des communications auxquelles un membre a participé dans un intervalle de temps choisi.

4. Procédé selon l'une des revendications 1 à 3, **caractérisé en ce que** l'on traite certaines au moins desdites données de communication enregistrées et/ou certaines au moins desdites données statistiques obtenues, en fonction d'au moins une règle d'inférence choisie, de manière à obtenir et/ou mettre à jour des données de raisonnement.

5. Procédé selon la revendication 4, **caractérisé en ce que** lesdites règles d'inférence sont définies par des membres et/ou par un administrateur dudit réseau de communication.

6. Procédé selon l'une des revendications 1 à 5, **caractérisé en ce que** l'on constitue un diagramme représentatif d'au moins un groupe de noeuds de réseau choisis et des liens existant entre ces derniers, en fonction d'au moins un critère choisi.

7. Système de constitution d'un réseau social de membres (Mi) définissant des noeuds de réseau et disposant d'au moins un équipement de communication (Ti) agencé pour établir des communications d'au moins un type via au moins un réseau de communication, **caractérisé en ce qu'**il comprend i) des moyens de contrôle (MC) agencés, chaque fois qu'un membre (Mi) a participé à une communication, pour récupérer des données représentatives de cette communication de manière à les enregistrer dans des premiers moyens de stockage (MS1) en fonction d'un identifiant dudit membre (Mi), et ii) des moyens de traitement (MT) agencés pour traiter certaines au moins desdites données enregistrées de manière à mettre à jour et/ou créer des attributs qualifiant lesdits membres (Mi), puis pour mettre à jour et/ou créer des liens entre membres (Mi) en fonction des attributs qui les qualifient, de manière à constituer un réseau social représentatif des habitudes de communication desdits membres (Mi).

8. Système selon la revendication 7, **caractérisé en ce que** lesdits moyens de contrôle (MC) sont agencés pour récupérer et enregistrer des données représentatives d'une communication, dites données de communication, choisies dans un groupe comprenant au moins un identifiant de membre appelant, un identifiant de membre appelé, le type de la communication, la date de la communication, l'horaire du début de la communication, l'horaire de la fin de la communication et la durée de la communication.

9. Système selon l'une des revendications 7 et 8, **caractérisé en ce que** lesdits moyens de traitement (MT) comprennent un premier moyen de traitement (SM1) agencé pour traiter de façon statistique certaines au moins desdites données de communication enregistrées de manière à obtenir et/ou mettre à jour des données statistiques stockées dans des deuxièmes moyens de stockage (MS2) et choisies dans un groupe comprenant au moins la fréquence moyenne des communications auxquelles un membre a participé, la fréquence moyenne des communications initiées par un membre, la fréquence moyenne des communications reçues par un membre, un rapport représentatif du nombre de communications initiées par un membre divisé par le nombre de communications reçues par ledit membre, la durée moyenne des communications auxquelles un membre a participé, la répartition des communications auxquelles un membre a participé en fonction de leurs types, et les types des communications auxquelles un membre a participé dans un intervalle de temps choisi.

10. Système selon l'une des revendications 7 à 9, **caractérisé en ce que** lesdits moyens de traitement (MT) comprennent un deuxième moyen de traitement (SM2) agencé pour traiter certaines au moins desdites données de communication enregistrées et/ou certaines au moins desdites données statistiques obtenues en fonction d'au moins une règle d'inférence choisie, de manière à obtenir et/ou mettre à jour des données de raisonnement stockées dans des troisièmes moyens de stockage (MS3).

11. Système selon la revendication 10, **caractérisé en ce que** lesdites règles d'inférence sont définies par des membres et/ou par un administrateur dudit réseau de communication.

12. Système selon l'une des revendications 7 à 11, **caractérisé en ce que** lesdits moyens de traitement (MT) comprennent un troisième moyen de traitement (SM3) agencé pour traiter certaines au moins desdites données de communication enregistrées dans lesdits premiers moyens de stockage (MS1) et/ou certaines au moins desdites données statistiques enregistrées dans lesdits deuxièmes moyens de stockage (MS2) et/ou certaines au moins desdites données de raisonnement enregistrées dans lesdits troisièmes moyens de stockage (MS3) de manière à créer et/ou mettre à jour des attributs enregistrés dans des quatrièmes moyens de stockage (MS4) en correspondance desdits noeuds de réseau, puis pour créer et/ou mettre à jour des liens entre membres (Mi) enregistrés dans lesdits quatrièmes moyens de stockage (MS4) en fonction des attributs qui qualifient lesdits membres (Mi), de manière à constituer un réseau social représentatif des habitudes de communication desdits membres (Mi).

13. Système selon la revendication 12, **caractérisé en ce que** ledit troisième moyen de traitement (SM3) est agencé pour constituer un diagramme représentatif d'au moins un groupe de noeuds de réseau choisis et des liens existant entre ces derniers, en fonction d'au moins un critère choisi.
